# EUROPEAN PATENT APPLICATION

(11) **EP 4 592 715 A1**
(43) Date of publication of application: **30.07.2025**
(21) Application number: 23868254.6
(22) Date of filing: 21.09.2023
(51) Int. Cl.: G01V 8/10, G01V 11/00, G06T 7/60

(54) **OBJECT DETECTION METHOD, PROGRAM, AND OBJECT DETECTION SYSTEM**

(30) Priority: 22.09.2022 US 202263408941 P
(71) Applicant: Nuvoton Technology Corporation Japan, Nagaokakyo City, Kyoto 617-8520 (JP)
(72) Inventor: KANEMARU, Masaki, Nagaokakyo City, Kyoto 617-8520 (JP); OKUYAMA, Tetsuro, Nagaokakyo City, Kyoto 617-8520 (JP); KAWAI, Yoshinao, Nagaokakyo City, Kyoto 617-8520 (JP)
(74) Representative: Novagraaf International SA
(86) International application number: PCT/JP2023/034261
(87) International publication number: WO 2024/063133

(57) **Abstract**

An object detection method that includes: obtaining a first image and a second image including pixels corresponding one to one to pixels of the first image (step S1); performing a first recognition process that recognizes a type of a first object included in the first image (step S2); performing a second recognition process that recognizes a position of a second object included in the second image (step S3); and when a first region based on the first object in the first image and a second region based on the second object in the second image overlap each other, detecting the first object and the second object as a same object (step S4).

## Description

### [Technical Field]

The present disclosure relates to an object detection method, a program, and an object detection system.

### [Background Art]

For example, Patent Literature (PTL) 1 discloses an object recognition device that, when two objects detected respectively using a radar and a camera satisfy a predetermined condition, recognizes these two objects as a same object.

In addition, for example, PTL 2 discloses an object detection device that determines that an object detected by a radar sensor and an object detected by a camera sensor are a same object on the condition that there is an overlapping region between a radar search region and an image search region.

### [Citation List]

### [Patent Literature]

[PTL 1] Japanese Unexamined Patent Application Publication No. 2019-152617
[PTL 2] Japanese Unexamined Patent Application Publication No. 2017-194432

### [Summary of Invention]

### [Technical Problem]

However, the techniques disclosed in PTL 1 and PTL 2 require a projection process that projects the detection results of the camera into the coordinate space of the radar, or projects the detection results of the radar into the image captured by the camera. Accordingly, the techniques disclosed in PTL 1 and PTL 2 have the problems that detection accuracy is degraded due to errors occurred in the projection process, and the processing time required to recognize an object increases by the time for performing the projection process.

In view of the above, the present disclosure provides an object detection method, etc. that facilitate the reduction of processing time while enhancing the detection accuracy.

### [Solution to Problem]

An object detection method according to the present disclosure includes: obtaining a first image and a second image including pixels corresponding one to one to pixels of the first image; performing a first recognition process that recognizes a type of a first object included in the first image; performing a second recognition process that recognizes a position of a second object included in the second image; and when a first region based on the first object in the first image and a second region based on the second object in the second image overlap each other, detecting the first object and the second object as a same object.

An object detection method according to the present disclosure includes: obtaining one image; performing a first recognition process that recognizes a type of a first object included in the one image; performing a second recognition process that recognizes a position of a second object included in the one image; and when a first region based on the first object in the one image and a second region based on the second object in the one image overlap each other, detecting the first object and the second object as a same object.

A program according to the present disclosure is a program for causing at least one processor to execute the above-described object detection method.

An object detection system according to the present disclosure includes: an obtainer that obtains a first image and a second image including pixels corresponding one to one to pixels of the first image; a first recognizer that performs a first recognition process that recognizes a type of a first object included in the first image; a second recognizer that performs a second recognition process that recognizes a position of a second object included in the second image; and a detector that, when a first region based on the first object in the first image and a second region based on the second object in the second image overlap each other, detects the first object and the second object as a same object.

### [Advantageous Effects of Invention]

The object detection method, etc. according to one aspect of the present disclosure yield an advantageous effect of facilitating the reduction of processing time while enhancing the detection accuracy.

### [Brief Description of Drawings]

[FIG. 1]

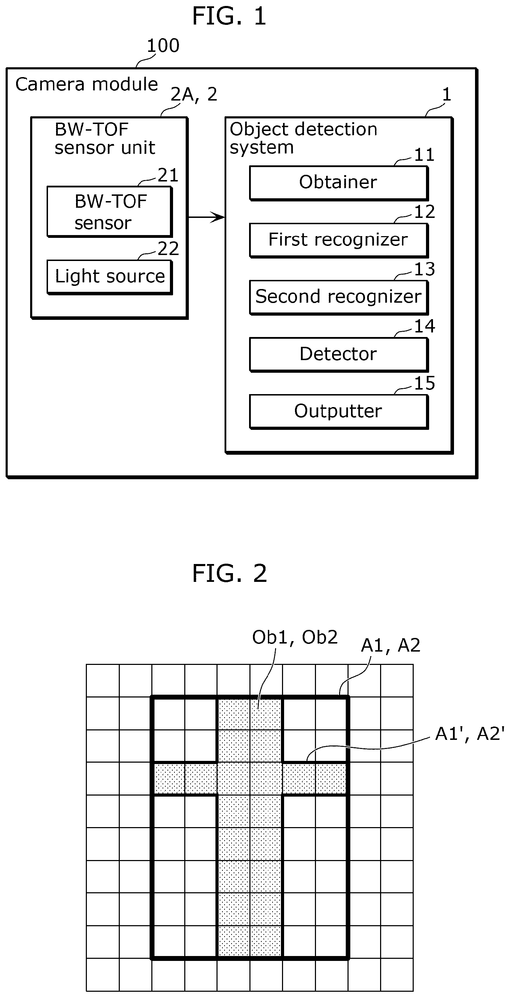

   FIG. 1 is a block diagram illustrating an overview of an object detection system according to an embodiment.
[FIG. 2]
   FIG. 2 is a diagram explaining a first region in a first image and a second region in a second image.
[FIG. 3]

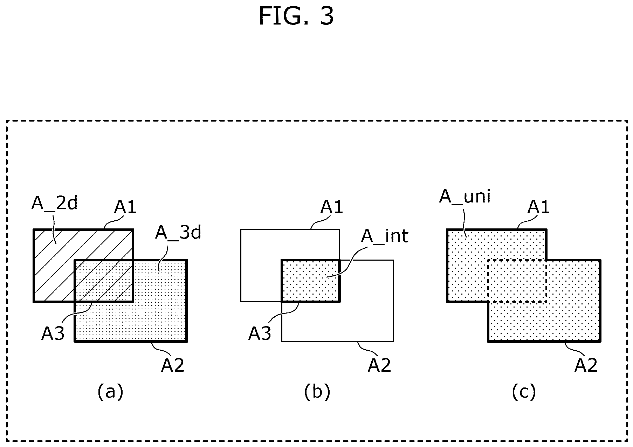

   FIG. 3 is a diagram explaining a first proportion and a second proportion.
[FIG. 4]

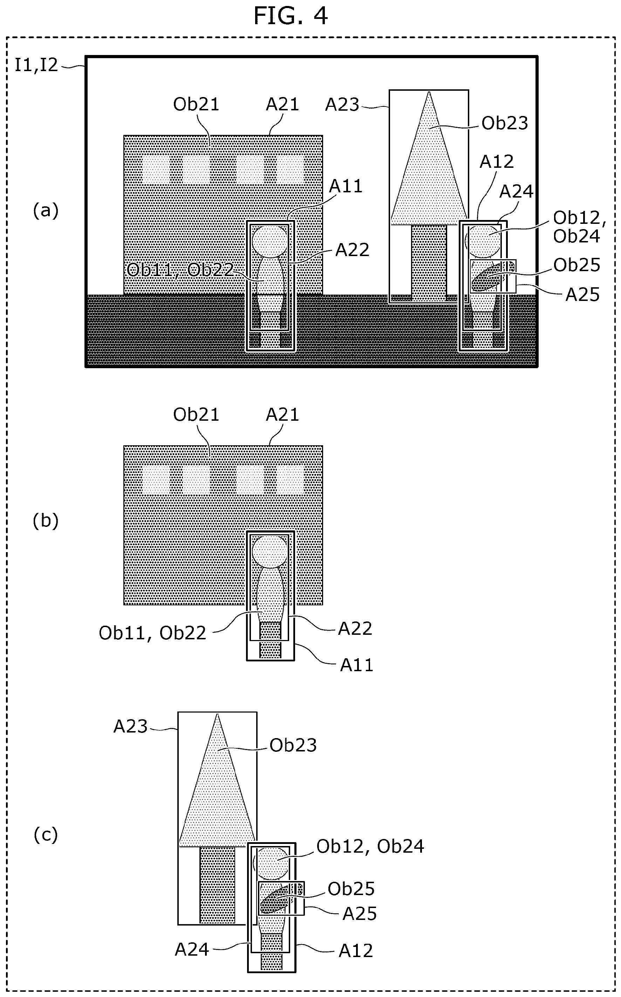

   FIG. 4 is a diagram illustrating a specific example of a detection process performed by the object detection system according to the embodiment.
[FIG. 5]

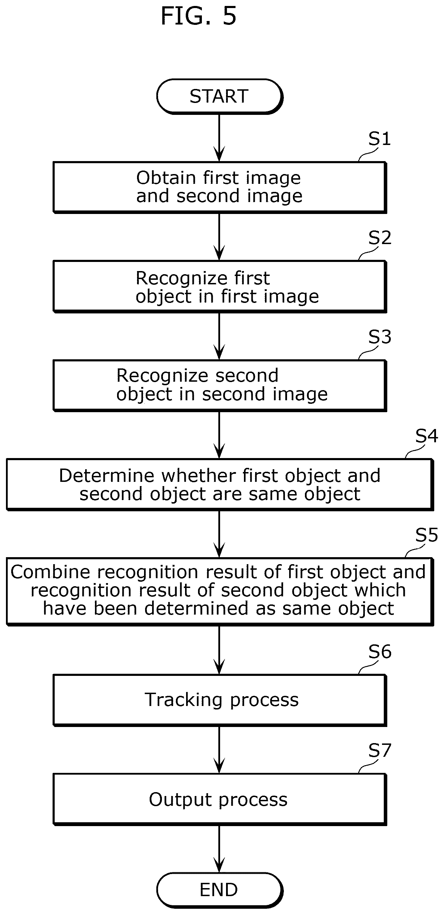

   FIG. 5 is a flowchart illustrating an operation example of the object detection system according to the embodiment.
[FIG. 6]

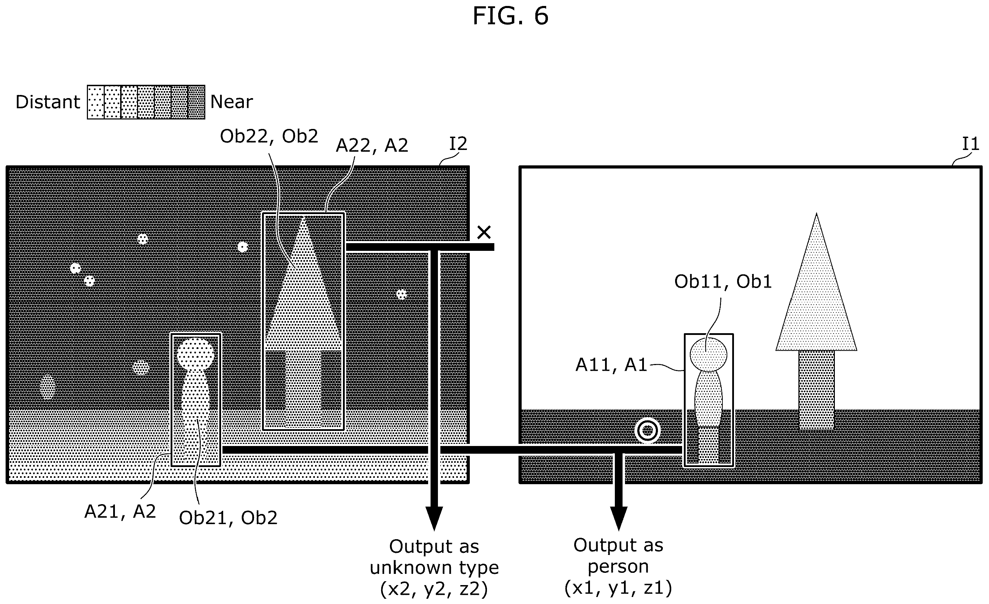

   FIG. 6 is a diagram illustrating a specific example of the object detection performed by the object detection system according to the embodiment.
[FIG. 7]

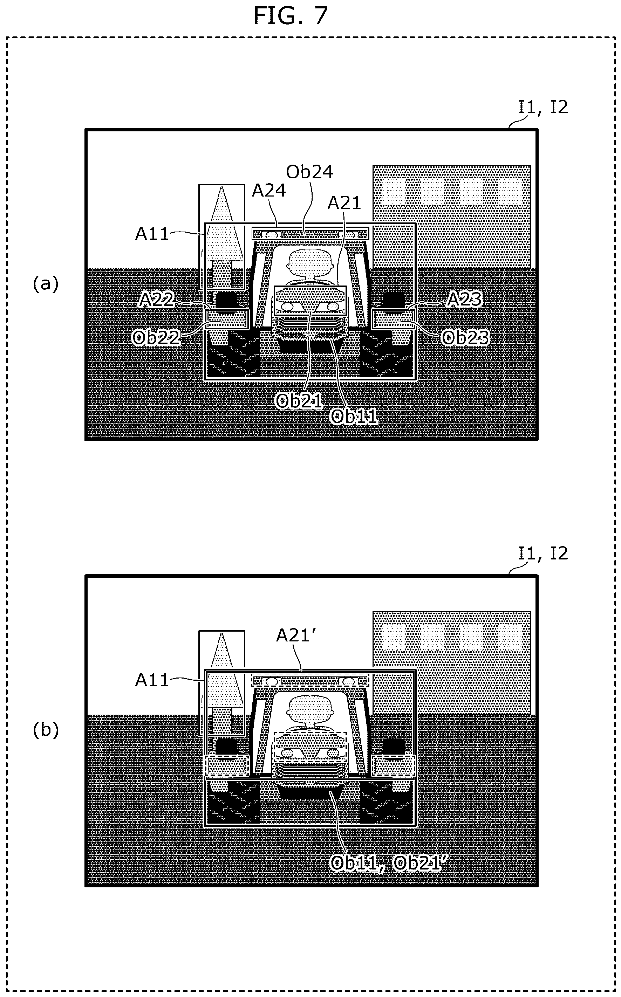

   FIG. 7 is a diagram illustrating a specific example of a detection process performed by the object detection system according to a first variation of the embodiment.
[FIG. 8]

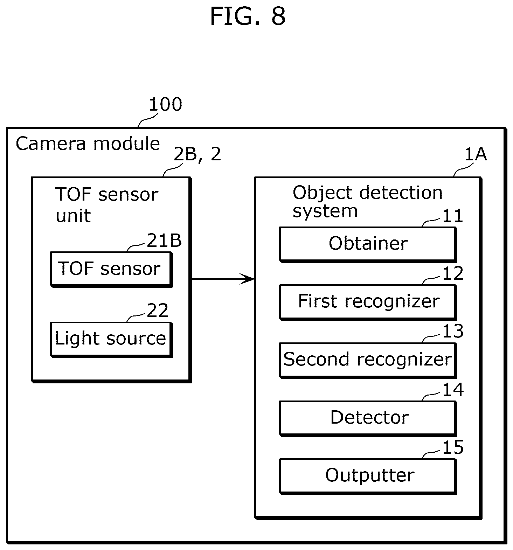

   FIG. 8 is a block diagram illustrating an overview of an object detection system according to a second variation of the embodiment.

### [Description of Embodiments]

Hereinafter, embodiments will be described in detail with reference to the Drawings.

Note that the embodiments described below each indicate a general or specific example. The numerical values, shapes, materials, structural components, the arrangement and connection of the structural components, steps, the processing order of the steps, etc. presented in the following embodiments are mere examples, and therefore do not limit the present disclosure.

### (Configuration)

Hereinafter, a configuration of an object detection system according to the embodiment will be described with reference to FIG. 1. FIG. 1 is a block diagram illustrating the outline of object detection system 1 according to the embodiment. Object detection system 1 is a system for detecting an object included in an image. According to the embodiment, object detection system 1 is provided in camera module 100.

Camera module 100 includes sensor unit 2 and object detection system 1. Sensor unit 2 may be a structural component of object detection system 1.

Camera module 100 includes a computer provided with a processor and memory, for example. The memory is a read only memory (ROM), a random access memory (RAM), or the like, and is capable of storing a program to be executed by the processor. Object detection system 1 is implemented by the processor, for example, that executes the program stored in the memory.

According to the embodiment, sensor unit 2 is black and white (BW)-time of flight (TOF) sensor unit 2A that has the functions of both a two-dimensional (2D) camera and a three-dimensional (3D) camera. BW-TOF sensor unit 2A includes BW-TOF sensor 21 and light source 22. In BW-TOF sensor 21, a pixel that receives near-infrared light (IR pixel) and a pixel that receives visible light (BW pixel) are disposed. Light source 22 emits near-infrared light. BW-TOF sensor unit 2A is capable of generating a luminance image (black and white image) by BW pixels when light source 22 is not emitting light. When light source 22 is emitting light, BW-TOF sensor unit 2A receives, by IR pixels, reflected light of the light irradiated by light source 22, and is capable of generating a depth image based on the amount of light received. In other words, BW-TOF sensor unit 2A is capable of generating both a luminance image and a depth image.

Object detection system 1 includes obtainer 11, first recognizer 12, second recognizer 13, detector 14, and outputter 15. It should be noted that outputter 15 need not necessarily be a structural component of object detection system 1.

Obtainer 11 obtains first image I1 (see FIG. 6, etc.) and second image I2 (see FIG. 6, etc.) including pixels corresponding one to one to pixels of first image I1. Each of first image I1 and second image I2 is a two-dimensional image. Here, "second image I2 including pixels corresponding one to one to pixels of first image I1" means that, when first image I1 and second image I2 are superimposed, each pixel of first image I1 and each pixel of second image I2 overlap each other with little or no shift.

First image I1 and second image I2 are images generated from the data captured by BW-TOF sensor unit 2A. First image I1 is a luminance image (black and white image) captured by BW pixels. In first image I1, each of the pixels is represented by luminance. Second image I2 is a depth image captured by IR pixels. In second image I2, each of the pixels is represented by a depth. The "depth" mentioned here refers to a distance from an object included in second image I2 to sensor unit 2 (or camera module 100).

It should be noted that the sensor having the functions of both the 2D camera and the 3D camera is not limited to BW-TOF sensor unit 2A. For example, the sensor having the functions of both the 2D camera and the 3D camera may be a red-green-blue (RGB)-TOF sensor. The RGB-TOF sensor differs from BW-TOF sensor unit 2A in that the RGB-TOF sensor is capable of generating a color image in place of a black and white image as a luminance image.

First recognizer 12 performs a first recognition process that recognizes a type of first object Ob1 (see FIG. 6, etc.) included in first image I1. Here, the first recognition process is a process that recognizes first object Ob1 included in first image I1, based on luminance.

Here, "recognizes first object Ob1 ... , based on luminance" means identifying, based on luminance, whether a predetermined object is included in first image I1. This object is the subject of recognition, and set as appropriate according to a use application or the like of object detection system 1. For example, when a person is to be detected using object detection system 1, the above-described object is a person. In this case, when a person is included in first image I1, this person is recognized as first object Ob1 in the first recognition process. On the other hand, when a tree is included in first image I1, this tree is not recognized as first object Ob1 in the first recognition process.

It should be noted that the object to be the subject of recognition in the first recognition process is not limited to a person but may be other objects. In addition, the object to be the subject of recognition in the first recognition process is not limited to one type but may be a plurality of types.

According to the embodiment, first recognizer 12 performs the first recognition process by using a trained model that has been subjected to machine learning in advance to recognize a predetermined object when first image I1 is input. It should be noted that first recognizer 12 may perform the first recognition process by, for example, performing a pattern matching process on first image I1 using a predetermined object as a pattern image.

Second recognizer 13 performs a second recognition process that recognizes a position (in particular, a position in a three-dimensional space) of second object Ob2 (see FIG. 6, etc.) included in second image I2. Here, the second recognition process is a process that recognizes second object Ob2 included in second image I2, based on a depth.

Here, "recognizes second object Ob2 ... , based on a depth" means setting a plurality of pixels that are close in depth (depth value) (i.e., the difference in depth value between pixels is less than a threshold) as one group, and identifying the group as an object. Accordingly, unlike the first recognition process, the type of an object is not taken into consideration in the second recognition process, and thus second object Ob2 is not limited to a predetermined object.

FIG. 2 is an explanatory diagram for first region A1 in first image I1 and second region A2 in second image I2. In the example illustrated in FIG. 2, it is assumed that first image I1 and second image I2 overlap each other. In the example illustrated in FIG. 2, it is also assumed that first object Ob1 and second object Ob2 are the same object.

First region A1 is a region based on first object Ob1 in first image I1. When first object Ob1 is recognized in the first recognition process, first region A1 is set in first image I1. Second region A2 is a region based on second object Ob2 in second image I2. When second object Ob2 is recognized in the second recognition process, second region A2 is set in second image I2.

According to the embodiment, as illustrated in FIG. 2, first region A1 is set in first image I1 as a quadrilateral region that includes not only the plurality of pixels indicating first object Ob1 but also one or more pixels in proximity to first object Ob1. In addition, according to the embodiment, as illustrated in FIG. 2, second region A2 is set in second image I2 as a quadrilateral region that includes not only the plurality of pixels indicating second object Ob2 but also one or more pixels in proximity to second object Ob2.

It should be noted that, as illustrated in FIG. 2, first region A1' may be set as a region that includes only the plurality of pixels indicating first object Ob1. In addition, as illustrated in FIG. 2, second region A2' may be set as a region that includes only the plurality of pixels indicating second object Ob2.

Detector 14 performs a detection process that detects first object Ob1 and second object Ob2 as the same object when first region A1 based on first object Ob1 included in first image I1 and second region A2 based on second object Ob2 included in second image I2 overlap each other. The detection process is, as it is called, a fusion process. According to the embodiment, in the detection process, a first determination process that determines whether first object Ob1 and second object Ob2 are the same object is performed based on whether first proportion R_2d or second proportion R_3d exceeds a reference value. Here, first proportion R_2d refers to a proportion of overlapping region A3 (see FIG. 3) where first region A1 and second region A2 overlap each other to first region A1. Second proportion R_3d refers to a proportion of overlapping region A3 to second region A2.

FIG. 3 is an explanatory diagram for first proportion R_2d and second proportion R_3d. As illustrated in (a) of FIG. 3, the area of first region A1 is denoted by "A_2d" and the area of second region A2 is denoted by "A_3d". In addition, as illustrated in (b) of FIG. 3, the area of overlapping region A3 is denoted by "A_i nt". Furthermore, as illustrated in (c) of FIG. 3, the area of the entire region that includes first region A1 and second region A2 is denoted by "A_uni". In this case, first proportion R_2d is represented by Expression "R_2d = A_int / A_2d''. In addition, second proportion R_3d is represented by Expression "R_3d = A_int / A_3d".

As described above, in the detection process, first, the first determination process is performed. In the first determination process, it is determined that first object Ob1 and second object Ob2 that satisfy a condition that first proportion R_2d is greater than or equal to first threshold R_2dth that is a reference value and second proportion R_3d is greater than or equal to second threshold R_3dth that is a reference value are the same object. On the other hand, in the first determination process, it is determined that first object Ob1 and second object Ob2 that do not satisfy the above-described condition are not the same object. First threshold R_2dth and second threshold R_3dth can be respectively set as appropriate according to the detection accuracy required for object detection system 1. First threshold R_2dth is 0.05, for example. Second threshold R_3dth is 0.3, for example.

In the detection process, when the first determination process has determined that a plurality of second objects Ob2 are the same object as first object Ob1, a second determination process that determines whether any of the plurality of second objects Ob2 and first object Ob1 are the same object is performed based further on the magnitude of first proportion R_2d. In the second determination process, for example, it is determined that second object Ob2 which is highest in first proportion R_2d among the plurality of second objects Ob2 is the same object as first object Ob1.

In the detection process, in the case where the second determination process has determined that a plurality of second objects Ob2 are the same object as first object Ob1, a third determination process that determines whether any of the plurality of second objects Ob2 and first object Ob1 are the same object is performed based further on a depth. Here, the case where the second determination process has determined that a plurality of second objects Ob2 are the same object as first object Ob1 corresponds, for example, to the case where a plurality of second objects Ob2 have almost the same value of first proportion R_2d. In the third determination process, for example, it is determined that second object Ob2 which is shortest in depth among the plurality of second objects Ob2 is the same object as first object Ob1.

It should be noted that, in the third determination process, whether any of the plurality of second objects Ob2 and first object Ob1 are the same object may be determined based on a parameter other than a depth. For example, the third determination process may determine that second object Ob2 of which the size of second region A2 is closest to the size of first region A1 is the same object as first object Ob1. In addition, for example, the third determination process may determine that second object Ob2 of which the representative value (e.g., an average value, a maximum value, or a mode value, etc.) of the luminance values of the plurality of pixels included in second region A2 is largest is the same object as first object Ob1.In addition, the third determination process may determine whether any of the plurality of second objects Ob2 and first object Ob1 are the same object, based on at least one of the depth described above, the sizes of first region A1 and second region A2, or the representative value of the luminance value of the plurality of pixels included in second region A2.

Hereinafter, a specific example the detection process will be described with reference to FIG. 4. FIG. 4 is a diagram illustrating a specific example of the detection process performed by object detection system 1 according to the embodiment. In the example illustrated in (a) of FIG. 4, first image I1 and second image I2 overlap each other. In addition, in the example illustrated in (a) of FIG. 4, two first objects Ob11 and Ob12 have been recognized in first image I1 by the first recognition process. In addition, in the example illustrated in (a) of FIG. 4, five second objects Ob21, Ob22, Ob23, Ob24, and Ob25 have been recognized in second image I2 by the second recognition process.

The detection process determines whether first object Ob11 and each of the five second objects Ob21, Ob22, Ob23, Ob24, and Ob25 are the same object. It should be noted that second regions A23, A24, and A25 respectively based on three second objects Ob23, Ob24, and Ob25 do not at all overlap first region A11 based on first object Ob11. For this reason, in the descriptions below, the determination process for these three second objects Ob23, Ob24, and Ob25 will be omitted, and only the determination process for the two second objects Ob21 and Ob22 will be described as indicated in (b) of FIG. 4.

First, in the detection process, the first determination process is performed for the combination of first object Ob11 and second object Ob21. When it is assumed that the first proportion is "R_2d_11" and the second proportion is "R_3d_11" in the above-described combination, the condition is not satisfied because ""R_2d_11 ≥ R_2dth" while "R_3d_11 < R_3dth". Accordingly, the first determination process determines that first object Ob11 and second object Ob21 are not the same object.

Next, in the detection process, the first determination process is performed for the combination of first object Ob11 and second object Ob22. When it is assumed that the first proportion is "R_2d_12" and the second proportion is "R_3d_12" in the above-described combination, the condition is satisfied because "R_2d_12 ≥ R_2dth" and "R_3d_12 ≥ R_3dth".Accordingly, the first determination process determines that first object Ob11 and second object Ob22 are the same object. In this manner, in the detection process, first object Ob11 and second object Ob22 are detected as the same object.

In addition, the detection process determines whether first object Ob12 and each of the five second objects Ob21, Ob22, Ob23, Ob24, and Ob25 are the same object. It should be noted that second regions A21 and A22 respectively based on two second objects Ob21 and Ob22 do not at all overlap first region A12 based on first object Ob12. For this reason, in the descriptions below, the determination process for these two second objects Ob21 and Ob22 will be omitted, and only the determination process for the three second objects Ob23, Ob24, and Ob25 will be described as indicated in (c) of FIG. 4.

First, in the detection process, the first determination process is performed for the combination of first object Ob12 and second object Ob23. When it is assumed that the first proportion is "R_2d_23" and the second proportion is "R_3d_23" in the above-described combination, the condition is not satisfied because "R_2d_23 < R_2dth" and "R_3d_23 < R_3dth". Accordingly, the first determination process determines that first object Ob12 and second object Ob23 are not the same object.

Next, in the detection process, the first determination process is performed for the combination of first object Ob12 and second object Ob24. When it is assumed that the first proportion is "R_2d_24" and the second proportion is "R_3d_24" in the above-described combination, the condition is satisfied because "R_2d_24 ≥ R_2dth" and "R_3d_24 ≥ R_3dth". Accordingly, the first determination process determines that first object Ob12 and second object Ob24 are the same object.

Next, in the detection process, the first determination process is performed for the combination of first object Ob12 and second object Ob25. When it is assumed that the first proportion is "R_2d_25" and the second proportion is "R_3d_25" in the above-described combination, the condition is satisfied because "R_2d_25 ≥ R_2dth" and "R_3d_25 ≥ R_3dth". Accordingly, the first determination process determines that first object Ob12 and second object Ob25 are the same object.

Here, since the first determination process has determined that two second objects Ob2 are the same object as first object Ob12, the second determination process is performed in the detection process. Here, comparing first proportion "R_2d_24" in the combination of first object Ob12 and second object Ob24 with first proportion "R_2d_25" in the combination of first object Ob12 and second object Ob25, "R_2d_24 > R_2d_25". Accordingly, the second determination process determines that first object Ob12 and second object Ob24 are the same object. In this manner, in the detection process, first object Ob12 and second object Ob24 are detected as the same object.

Outputter 15 performs an output process for outputting object information on the object detected in the detection process by detector 14, the object information including information indicating the type of the object recognized in the first recognition process and information indicating the position of the object recognized in the second recognition process. More specifically, the object information is the information resulting from combining the recognition result of first object Ob1 and the recognition result of second object Ob2 which have been detected as the same object. The recognition result of first object Ob1 is information indicating the type of first object Ob1 recognized by the first recognition process. The recognition result of second object Ob2 is information indicating the position (position in a three-dimensional space) of second object Ob2 recognized by the second recognition process.

For example, when camera module 100 is provided in a vehicle such as an automobile, outputter 15 outputs the object information to an in-vehicle electronic control unit (ECU). In this case, the in-vehicle ECU can use the object information for controlling the vehicle. In addition, for example, outputter 15 outputs the object information to an in-vehicle display for display. In this case, the driver of the vehicle can use the object information for driving the vehicle, by viewing the in-vehicle display.

In addition, in the output process performed by outputter 15, the object information may further include information indicating the traveling speed or the traveling direction of the object indicated by the object information (i.e., the object detected in the detection process). The traveling speed of the object can be calculated by referring to the time series data of the information indicating the position of second object Ob2. In the same manner as above, the traveling direction of the object can be calculated by referring to the time series data of the information indicating the position of second object Ob2.

In addition, object detection system 1 may further perform a tracking process for tracking the object indicated by the object information (i.e., the object detected in the detection process). In the tracking process, the object detected in the detection process is tracked, thereby obtaining the time series data of the object. The output process performed by outputter 15 may further output a result of the tracking process.

For example, as a result of outputter 15 outputting the result of the tracking process to the in-vehicle ECU, the in-vehicle ECU can perform control of the vehicle based on the trajectory of the detected object. In addition, for example, as a result of outputter 15 outputting the result of the tracking process to the in-vehicle ECU for display, the driver of the vehicle can drive the vehicle based on the trajectory of the detected object, by viewing the in-vehicle display.

### (Operation)

Hereinafter, an operation example of object detection system 1 according to the embodiment will be described with reference to FIG. 5.

First, obtainer 11 of object detection system 1 obtains first image I1 and second image I2 (step S1). According to the embodiment, obtainer 11 obtains first image I1 and second image I2 by obtaining the luminance image and the depth image captured by BW-TOF sensor unit 2A which is sensor unit 2.

Next, first recognizer 12 of object detection system 1 performs the first recognition process that recognizes the type of first object Ob1 in first image I1 (step S2). In addition, second recognizer 13 of object detection system 1 performs the second recognition process that recognizes the type of second object Ob2 in second image I2 (step S3).It should be noted that step S2 and step S3 may be executed not in stated order but in reverse order. Alternatively, step S2 and step S3 may be executed in parallel.

Next, detector 14 of object detection system 1 performs a detection process. More specifically, detector 14 determines whether first object Ob1 recognized in the first recognition process and second object Ob2 recognized in the second recognition process are the same object (step S4). According to the embodiment, detector 14 first performs a first determination process. Then, when the first determination process determines that a plurality of second objects Ob2 are the same object as first object Ob1, detector 14 further performs a second determination process. When the second determination process determines that a plurality of second objects Ob2 are the same object as first object Ob1, detector 14 further performs a third determination process.

When the detection process detects the first object Ob1 and the second object Ob2 as the same object, object detection system 1 combines the recognition results of first object Ob1 and the second object Ob2 which have been determined as the same object (step S5). Step S5 may be performed by detector 14 or may be performed by outputter 15.

In addition, object detection system 1 performs the tracking process (step S6), if necessary. Step S6 may be performed by detector 14 or may be performed by outputter 15.Whether or not to perform the tracking process can be set as appropriate.

Outputter 15 of object detection system 1 then performs an output process (step S7).According to the embodiment, outputter 15 outputs object information that includes at least information indicating the type of the object and information indicating the position of the object which have been detected in the detection process.

FIG. 6 is a diagram illustrating a specific example of the object detection performed by object detection system 1 according to the embodiment. In the example illustrated in FIG. 6, the first recognition process performed by first recognizer 12 is to recognize a person as a predetermined object.

As illustrated in FIG. 6, in the first recognition process, first object Ob11 that is a humanoid object included in first image I1 is recognized, and the tree is not recognized as first object Ob1. As a result, first region A11 based on first object Ob11 is set in first image I1. In addition, in the second recognition process, second object Ob21 that is a humanoid object and second object Ob22 that is a tree-shaped object which are included in second image I2 are recognized. As a result, second region A21 based on second object Ob21 that is the humanoid object and second region A22 based on second object Ob22 that is the tree-shaped object are set in second image I2.

In the example illustrated in FIG. 6, since first region A11 and second region A21 overlap each other, object detection system 1 detects first object Ob11 that is the humanoid object and second object Ob21 that is the humanoid object as the same object. For that reason, object detection system 1 outputs object information with the type of the object as "person" and the position of the object as "(x1, y1, z1)". The "(x1, y1, z1)" are the coordinates indicating the position of second object Ob21 recognized by the second recognition process.

In addition, in the example illustrated in FIG. 6, object detection system 1 also outputs object information on second object Ob22 that is the tree-shaped object, although there is no first region A1 that overlaps second region A22. In this object information, the position of the object is "(x2, y2, z2)" and the type of the object is "unknown". The coordinates "(x2, y2, z2)" are the coordinates indicating the position of second object Ob22 recognized by the second recognition process. In this manner, object detection system 1 may not only output the information on the object that has been detected as the same object by the detection process, but also further out information on the object that has not been detected as the same object.

### (Advantageous Effects)

Hereinafter, advantageous effects of object detection system 1 according to the embodiment will be described. The techniques disclosed in PTL 1 and PTL 2 require a projection process that projects the detection results of the camera into the coordinate space of the radar, or projects the detection results of the radar into the image captured by the camera, before the so-called fusion process is performed. Accordingly, the techniques disclosed in PTL 1 and PTL 2 have the problems that detection accuracy is degraded due to errors occurring in the projection process, and the processing time required to recognize an object increases by the time for performing the projection process.

In contrast, object detection system 1 according to the embodiment performs the detection process (fusion process) after performing the first recognition process for first image I1 and performing the second recognition process for second image I2 including pixels corresponding one to one to pixels of first image I1. For this reason, with object detection system 1 according to the embodiment, first region A1 and second region A2 can be set separately in first image I1 and second image I2, and thus the projection process as described above is unnecessary. As a result, with object detection system 1 according to the embodiment, the problems associated with performing the projection process do not occur, and thus the advantageous effects of facilitating reduction in the processing time while enhancing the detection accuracy can be yielded.

### (Other Embodiments)

Although the object detection system according to one or more aspects of the present disclosure have been described above based on the embodiment, the present disclosure is not limited to the above-described embodiment. Various modifications of the present embodiment as well as embodiments resulting from combinations of structural components from different embodiments that may be conceived by those skilled in the art are intended to be included within the scope of the one or more aspects of the present disclosure, so long as these do not depart from the essence of the present disclosure.

### (First Variation)

FIG. 7 is a diagram illustrating a specific example of the detection process performed by object detection system 1 according to a first variation of the embodiment. The detection process executed by object detection system 1 according to the first variation differs from the detection process executed by object detection system 1 according to the embodiment. It should be noted that, in the following description, explanations of points in common with object detection system 1 according to the embodiment will be omitted.

As in the example illustrated in (a) of FIG. 7, when an object having a complex shape such as an agricultural machinery, for example, is included in second image I2, there are instances where the second recognition process does not recognize the object as a single second object Ob2 but recognizes the object as a plurality of second objects Ob2. In the example illustrated in (a) of FIG. 7, the first recognition process recognizes an object that has a shape of an agricultural machinery as one first object Ob11. On the other hand, the second recognition process does not recognize an object that has a shape of an agricultural machinery as one second object Ob2, but as four second objects Ob21, Ob22, Ob23, and Ob24.

In this case, second regions A21, A22, A23, and A24 based on second objects Ob21, Ob22, Ob23, and Ob24, respectively, are smaller than second region A2 based on the agricultural machinery as one second object Ob2. Therefore, first proportion R_2d of each of second objects Ob21, Ob22, Ob23, and Ob24 is reduced, making it difficult to determine second objects Ob21, Ob22, Ob23, and Ob24 as a same object as first object Ob11 in the first determination process.

In view of the above, according to the first variation, in the detection process, in the case where: there are a plurality of second objects Ob2 recognized in the second recognition process; second region A2 based on each of the plurality of second objects Ob2 overlaps first region A1 based on the same first object Ob1; and the depth of each of the plurality of second objects Ob2 falls within a predetermined range, the plurality of second objects Ob2 are combined. The detection process then determines whether second object Ob2 resulting from the combining and first object Ob1 are the same object.

First, the detection process determines two or more second objects Ob2 with second proportion R_3d greater than or equal to second threshold R_3dth in the combinations of first object Ob11 and each of the plurality of second objects Ob2. In the example illustrated in (a) of FIG. 7, four second objects Ob21, Ob22, Ob23, and Ob24 correspond to the above-described two or more second objects Ob2. In the example illustrated in (a) of FIG. 7, second regions A21, A22, A23, and A24 based on the four second objects Ob21, Ob22, Ob23, and Ob24, respectively, each overlap first region A11 based on the same first object Ob11. In addition, the depth of each of the plurality of second objects Ob21, Ob22, Ob23, and Ob24 falls within the predetermined range.

Therefore, in the detection process, for example, as illustrated in (b) of FIG. 7, these four second objects Ob21, Ob22, Ob23, and Ob24 are combined into combined second object Ob21' that is a single object encompassing these four second objects Ob21, Ob22, Ob23, and Ob24, and second region A21' based on combined second object Ob21' is set in second image I2. It should be noted that, in the example illustrated in (b) of FIG. 7, second region A21' is a quadrilateral region that encompasses second regions A21, A22, A23, and A24, but is not limited to this example. For example, second region A21' may be a region that includes only second regions A21, A22, A23, and A24.

Hereafter, detector 14 performs the first determination process for the combination of first object Ob11 and combined second object Ob21'. In this manner, detector 14 is capable of detecting first object Ob11 and combined second object Ob21' as the same object. It should be noted that, when the first determination process determines that a plurality of combined second objects Ob2 are the same object as first object Ob1, detector 14 further performs a second determination process. In addition, when the second determination process determines that a plurality of combined second objects Ob2 are the same object as first object Ob1, detector 14 further performs a third determination process.

Here, in the detection process, the position of any one of the plurality of second objects Ob2 that have been subjected to the combining may be calculated as the position of the detected object. For example, the position of second object Ob2 with the shortest depth among the plurality of second objects Ob2 may be calculated as the position of the detected object. In addition, for example, the position of second object Ob2 of which the size of second region A2 is the largest among the plurality of second objects Ob2 may be calculated as the position of the detected object. In addition, for example, the position of second object Ob2 which is the largest in a total number of pixels recognized as the second object Ob2 among the plurality of second objects Ob2 may be calculated as the position of the detected object. In addition, for example, the position of second object Ob2 which is the highest in luminance of pixels recognized as the second object Ob2 among the plurality of second objects Ob2 may be calculated as the position of the detected object.

In this case, the position of the detected object may be calculated as one of the coordinates of the nearest neighbor point from sensor unit 2, the distant coordinates of the most distant point from sensor unit 2, or the center of gravity coordinates of second object Ob2 selected as described above.

In addition, in the detection process, the position of combined second object Ob2 may be calculated as the position of the detected object. In this case, the position of the detected object may be calculated as one of the coordinates of the nearest neighbor point from sensor unit 2, the distant coordinates of the most distant point from sensor unit 2, or the center of gravity coordinates of combined second object Ob2.

### (Second Variation)

FIG. 8 is a block diagram illustrating the outline of object detection system 1A according to a second variation of the embodiment. Object detection system 1A according to the second variation differs from object detection system 1 according to the embodiment in that sensor unit 2 is TOF sensor unit 2B instead of BW-TOF sensor unit 2A. It should be noted that, in the following description, explanations of points in common with object detection system 1 according to the embodiment will be omitted.

TOF sensor unit 2B is a depth sensor. TOF sensor unit 2B includes TOF sensor 21B and light source 22. In TOF sensor 21B, pixels that receive near-infrared light (IR pixels) are disposed. TOF sensor 21B is capable of generating a luminance image of near-infrared light (IR luminance image) and a depth image. Accordingly, obtainer 11 of object detection system 1A according to the second variation obtains, as first image I1, a luminance image (IR luminance image) in which each pixel is represented by luminance, and obtains, as second image I2, a depth image in which each pixel is represented by depth.

### (Other Variations)

For example, according to the embodiment, in the first determination process, whether first object Ob1 and second object Ob2 are the same object may be determined based on third proportion IoU that is a proportion of overlapping region A3 to the entire region including first region A1 and second region A2. Third proportion IoU is represented by Expression "IoU = A_int / A_uni". For example, the first determination process may determine that first object Ob1 and second object Ob2 are the same object when the condition that third proportion IoU is greater than or equal to third threshold IoU_th that is a reference value is satisfied, and may determine that first object Ob1 and second object Ob2 are not the same object when the above-described condition is not satisfied.

In addition, the first determination process may determine whether first object Ob1 and second object Ob2 are the same object by combining first proportion R_2d, second proportion R_3d, and third proportion IoU. In other words, in the detection process, whether first object Ob1 and second object Ob2 are the same object may be determined based on whether at least one of first proportion R_2d, second proportion R_3d, or third proportion IoU exceeds the reference value.

For example, in the embodiment, when the first determination process has determined that a plurality of second objects Ob2 are the same object as first object Ob1, the second determination process may determine whether any of the plurality of second objects Ob2 and first object Ob1 are the same object, based further on the magnitude of at least one of first proportion R_2d, second proportion R_3d, or third proportion IoU.

For example, in the embodiment, first image I1 and second image I2 may be one image. For example, when sensor unit 2 is a TOF sensor, the depth image output by the TOF sensor may be first image I1 and second image I2. In other words, the above-described depth image is first image I1, and is also second image I2. In this case, it is sufficient if each of the first recognition process and the second recognition process is performed on the above-described depth image.

For example, according to the embodiment, object detection system 1 is provided in camera module 100, but the present disclosure is not limited to this. For example, object detection system 1 may be implemented by a device other than camera module 100, such as a personal computer, etc.

For example, the present disclosure can be implemented not only as the object detection system, but also as an object detection method that includes steps (processes) performed by the structural components that constitute the object detection system.

The object detection method is a method performed by the object detection system. For example, as illustrated in FIG. 5, the object detection method includes obtaining first image I1 and second image I2 including pixels corresponding one to one to pixels of first image I1 (step S1); performing a first recognition process that recognizes a type of first object Ob1 included in first image I1 (step S2); performing a second recognition process that recognizes a position of second object Ob2 included in second image I2 (step S3); and when first region A1 based on first object Ob1 in first image I1 and second region A2 based on second object Ob2 in second image I2 overlap each other, detecting first object Ob1 and second object Ob2 as a same object (step S4).

In addition, when first image I1 and second image I2 are one image as described above, the object detection method includes: obtaining one image; performing a first recognition process that recognizes a type of first object Ob1 included in the one image; performing a second recognition process that recognizes a position of second object Ob2 included in the one image; and when first region A1 based on first object Ob1 in the one image and second region A2 based on second object Ob2 in the one image overlap each other, detecting first object Ob1 and second object Ob2 as a same object.

For example, the present disclosure may be implemented as a program for causing a computer (processor) to execute the steps included in the object detection method. There may be one or more processors. In addition, the present disclosure can be implemented as a non-transitory computer-readable recording medium such as a compact disc-read only memory (CD-ROM) including the program recorded thereon.

For example, when the present disclosure is implemented by a program (software), each of the steps is performed as a result of the program being executed by utilizing hardware resources such as a CPU, memory, an input and output circuit, etc. of a computer. In other words, the CPU obtains data from memory, an input and output circuit, or the like, and calculates the obtained data, or outputs a result of calculation to the memory or the input and output circuit, or the like. As a result, each of the steps is performed.

It should be noted that, in the above-described embodiment, each of the structural components included in the object detection system may be configured in the form of a dedicated hardware product, or may be implemented by executing a software program suitable for the structural components. Each of the structural components may be realized by means of a program executing unit, such as a CPU or a processor, reading and executing the software program recorded on a recording medium such as a hard disk or a semiconductor memory.

In addition, all or part of the functions of the object detection system according to the foregoing embodiment is implemented typically as an LSI that is an integrated circuit. They may be implemented as a single chip one-by-one, or as a single chip to include part or all of them. In addition, the integrated circuit is not limited to an LSI, and it may be implemented as a dedicated circuit or a general-purpose processor. Field Programmable Gate Array (FPGA) that can be programmed after manufacturing LSIs or a reconfigurable processor that allows re-configuration of the connection or settings of circuit cells inside an LSI may be used for the same purpose.

### (Others)

The descriptions of the embodiments described above disclose the following techniques.
(Technique 1) An object detection method that includes: obtaining a first image and a second image including pixels corresponding one to one to pixels of the first image; performing a first recognition process that recognizes a type of a first object included in the first image; performing a second recognition process that recognizes a position of a second object included in the second image; and when a first region based on the first object in the first image and a second region based on the second object in the second image overlap each other, detecting the first object and the second object as a same object.
   According to the above, since the first region and the second region can be set separately in the first image and the second image, a projection process for projecting the detection result of a camera into the coordinate space of a radar or projecting the detection result of the radar into the image captured by the camera is unnecessary. As a result, with this, the problems associated with performing the projection process do not occur, and thus the advantageous effect of facilitating reduction in the processing time while enhancing the detection accuracy is yielded.
(Technique 2) The object detection method according to Technique 1, in which the first image and the second image are images generated from data captured by a sensor unit that is a single sensor unit.
   According to the above, an advantageous effect that the pixels in the first image more easily correspond one-to-one to the pixels in the second image is yielded, compared to the case where the first image and the second image are obtained from data captured by a plurality of sensor units.
(Technique 3) The object detection method according to Technique 2, in which the sensor unit is a sensor including a pixel that receives near-infrared light, the first image is a luminance image in which each of the pixels is represented by luminance of the near-infrared light, and the second image is a depth image in which each of the pixels is represented by a depth calculated from an amount of the near-infrared light received.
   According to the above, an advantageous effect that it is possible to obtain the first image and the second image without using a 2D camera is yielded.
(Technique 4) The object detection method according to Technique 2, in which the sensor unit is a sensor including a pixel that receives visible light and a pixel that receives near-infrared light, the first image is captured by the pixel that receives visible light, and is a luminance image in which each of the pixels is represented by luminance of the visible light, and the second image is captured by the pixel of the sensor that receives near-infrared light, and is a depth image in which each of the pixels is represented by a depth calculated from an amount of the near-infrared light received.
   According to the above, since the 2D camera and the 3D camera are integrally provided, an advantageous effect of facilitating the downsizing of the sensor unit is yielded.
(Technique 5) An object detection method that includes: obtaining one image; performing a first recognition process that recognizes a type of a first object included in the one image; performing a second recognition process that recognizes a position of a second object included in the one image; and when a first region based on the first object in the one image and a second region based on the second object in the one image overlap each other, detecting the first object and the second object as a same object.
   According to the above, since the first region and the second region can be set in one image, a projection process for projecting the detection result of a camera into the coordinate space of a radar or projecting the detection result of the radar into the image captured by the camera is unnecessary. As a result, with this, the problems associated with performing the projection process do not occur, and thus the advantageous effect of facilitating reduction in the processing time while enhancing the detection accuracy is yielded.
(Technique 6) The object detection method according to any one of Techniques 1 to 5, in which the detecting includes performing a first determination process that determines whether the first object and the second object are a same object, based on whether at least one of: a first proportion that is a proportion of an overlapping region to the first region; a second proportion that is a proportion of the overlapping region to the second region; or a third proportion that is a proportion of the overlapping region to an entire region exceeds a reference value, the overlapping region being a region where the first region and the second region overlap each other, the entire region being a region including the first region and the second region.
   According to the above, the first object and the second object that satisfy the condition that at least one of the first proportion, the second proportion, or the third proportion exceeds the reference value are detected as the same object. As a result, an advantageous effect of facilitating the enhancement in detection accuracy is yielded.
(Technique 7) The object detection method according to Technique 6, in which the detecting includes, when a plurality of second objects each being the second object have been determined as the same object as the first object in the first determination process, performing a second determination process that determines whether any of the plurality of second objects and the first object are a same object, based further on a magnitude of at least one of the first proportion, the second proportion, or the third proportion.
   According to the above, when it is determined that a plurality of second objects are the same object as the first object, any of the plurality of second objects can be selected based on the magnitude of at least one of the first proportion, the second proportion, or the third proportion. As a result, an advantageous effect of facilitating the enhancement in detection accuracy is yielded.
(Technique 8) The object detection method according to Technique 7, in which the detecting includes, when a plurality of second objects each being the second object have been determined as the same object as the first object in the second determination process, performing a third determination process that determines whether any of the plurality of second objects and the first object are a same object, based further on at least one of the depth, sizes of the first region and the second region, or a representative value of luminance values of a plurality of pixels included in the second region.
   According to the above, when it is determined that a plurality of second objects are the same object as the first object, any of the plurality of second objects can be selected based on at least one of: the depth; the sizes of the first region and the second region; or the representative value the luminance values of a plurality of pixels included in the second region. As a result, an advantageous effect of facilitating the enhancement in detection accuracy is yielded.
(Technique 9) The object detection method according to any one of Techniques 1 to 8, in which the detecting includes, when (i) the second recognition process recognizes positions of a plurality of second objects each being the second object, (ii) a second region based on each of the plurality of second objects overlaps a first region based on a same object that is the first object, and (iii) the depth of each of the plurality of second objects falls within a predetermined range, combining the plurality of second objects, and determining whether a combined second object resulting from the combining and the first object are a same object.
   According to the above, even when an object that is actually a single object is recognized as a plurality of second objects, the plurality of second objects can be considered as a single object. As a result, an advantageous effect of facilitating the enhancement in detection accuracy is yielded.
(Technique 10) The object detection method according to Technique 9, in which the detecting includes calculating a position of any one of the plurality of second objects that have been subjected to the combining, as a position of the same object detected in the detecting.
   According to the above, the position of any one of the plurality of second objects that have been subjected to the combining is referred to. As a result, an advantageous effect of facilitating the enhancement in the accuracy in calculating the position of the object detected is yielded.
(Technique 11) The object detection method according to Technique 9, in which the detecting includes calculating a position of the combined second object resulting from the combining, as a position of the same object detected in the detecting.
   According to the above, the position of the combined second object is referred to. As a result, an advantageous effect of facilitating the enhancement in the accuracy in calculating the position of the object detected is yielded.
(Technique 12) The object detection method according to any one of Techniques 1 to 11, which further includes: outputting object information on the same object detected in the detecting, the object information including information indicating the type of the object recognized in the first recognition process and information indicating the position of the object recognized in the second recognition process.
   According to the above, the type and position of the object detected by the detection process can be referred to by a system or the like of the output destination. As a result, an advantageous effect of facilitating the performing of control based on the type and position of the object is yielded.
(Technique 13) The object detection method according to Technique 12, in which in the outputting, information indicating a traveling speed or a traveling direction of the same object detected in the detecting and indicated by the object information is further included in the object information and output.
   According to the above, the traveling speed or the traveling direction of the object detected by the detection process can be referred to by a system or the like of the output destination. As a result, an advantageous effect of facilitating the performing of control based on the traveling speed or the traveling direction of the object is yielded.
(Technique 14) The object detection method according to Technique 12 or Technique 13, which further includes: tracking the same object detected in the detecting and indicated by the object information, in which in the outputting, a result of the tracking is further output.
   According to the above, the trajectory of the object detected by the detection process can be referenced to by a system or the like of the output destination. As a result, an advantageous effect of facilitating the performing of control based on the trajectory of the object is yielded.
(Technique 15) A program for causing at least one processor to execute the object detection method according to any one of Techniques 1 to 14. According to the above, it is possible to provide a program that facilitates the reduction in the processing time while enhancing the detection accuracy.
(Technique 16) An object detection system that includes: an obtainer that obtains a first image and a second image including pixels corresponding one to one to pixels of the first image; a first recognizer that performs a first recognition process that recognizes a type of a first object included in the first image; a second recognizer that performs a second recognition process that recognizes a position of a second object included in the second image; and a detector that, when a first region based on the first object in the first image and a second region based on the second object in the second image overlap each other, detects the first object and the second object as a same object.

According to the above, it is possible to provide an object detection system that facilitates the reduction in the processing time while enhancing the detection accuracy.

### [Industrial Applicability]

The present disclosure is applicable to devices, etc. that recognize objects by a so-called fusion process.

### [Reference Signs List]

1, 1A object detection system
11 obtainer
12 first recognizer
13 second recognizer
14 detector
15 outputter
2 sensor unit
2A BW-TOF sensor unit
21 BW-TOF sensor
22 light source
2B TOF sensor unit
21B TOF sensor
100 camera module
A1, A1', A11, A12 first region
A2, A2', A21, A22, A23, A24, A25 second region
A21' combined second region
A3 overlapping region
A_2D area of first region
A_3D area of second region
A_int area of overlapping region
A_uni area of the entire region
I1 first image
I2 second image
Ob1, Ob11, Ob12 first object
Ob2, Ob21, Ob22, Ob23, Ob24, Ob25 second object
Ob21' combined second object

## Claims

1. An object detection method comprising:
obtaining a first image and a second image including pixels corresponding one to one to pixels of the first image;
performing a first recognition process that recognizes a type of a first object included in the first image;
performing a second recognition process that recognizes a position of a second object included in the second image; and
when a first region based on the first object in the first image and a second region based on the second object in the second image overlap each other, detecting the first object and the second object as a same object.

2. The object detection method according to claim 1, wherein
the first image and the second image are images generated from data captured by a sensor unit that is a single sensor unit.

3. The object detection method according to claim 2, wherein
the sensor unit is a sensor including a pixel that receives near-infrared light,
the first image is a luminance image in which each of the pixels is represented by luminance of the near-infrared light, and
the second image is a depth image in which each of the pixels is represented by a depth calculated from an amount of the near-infrared light received.

4. The object detection method according to claim 2, wherein
the sensor unit is a sensor including a pixel that receives visible light and a pixel that receives near-infrared light,
the first image is captured by the pixel that receives visible light, and is a luminance image in which each of the pixels is represented by luminance of the visible light, and
the second image is captured by the pixel of the sensor that receives near-infrared light, and is a depth image in which each of the pixels is represented by a depth calculated from an amount of the near-infrared light received.

5. An object detection method comprising:
obtaining one image;
performing a first recognition process that recognizes a type of a first object included in the one image;
performing a second recognition process that recognizes a position of a second object included in the one image; and
when a first region based on the first object in the one image and a second region based on the second object in the one image overlap each other, detecting the first object and the second object as a same object.

6. The object detection method according to any one of claims 1 to 5, wherein
the detecting includes performing a first determination process that determines whether the first object and the second object are a same object, based on whether at least one of: a first proportion that is a proportion of an overlapping region to the first region; a second proportion that is a proportion of the overlapping region to the second region; or a third proportion that is a proportion of the overlapping region to an entire region exceeds a reference value, the overlapping region being a region where the first region and the second region overlap each other, the entire region being a region including the first region and the second region.

7. The object detection method according to claim 6, wherein
the detecting includes, when a plurality of second objects each being the second object have been determined as the same object as the first object in the first determination process, performing a second determination process that determines whether any of the plurality of second objects and the first object are a same object, based further on a magnitude of at least one of the first proportion, the second proportion, or the third proportion.

8. The object detection method according to claim 7, wherein
the detecting includes, when a plurality of second objects each being the second object have been determined as the same object as the first object in the second determination process, performing a third determination process that determines whether any of the plurality of second objects and the first object are a same object, based further on at least one of the depth, sizes of the first region and the second region, or a representative value of luminance values of a plurality of pixels included in the second region.

9. The object detection method according to any one of claims 1 to 8, wherein
the detecting includes, when (i) the second recognition process recognizes positions of a plurality of second objects each being the second object, (ii) a second region based on each of the plurality of second objects overlaps a first region based on a same object that is the first object, and (iii) the depth of each of the plurality of second objects falls within a predetermined range, combining the plurality of second objects, and determining whether a combined second object resulting from the combining and the first object are a same object.

10. The object detection method according to claim 9, wherein
the detecting includes calculating a position of any one of the plurality of second objects that have been subjected to the combining, as a position of the same object detected in the detecting.

11. The object detection method according to claim 9, wherein
the detecting includes calculating a position of the combined second object resulting from the combining, as a position of the same object detected in the detecting.

12. The object detection method according to any one of claims 1 to 11, further comprising:
outputting object information on the same object detected in the detecting, the object information including information indicating the type of the object recognized in the first recognition process and information indicating the position of the object recognized in the second recognition process.

13. The object detection method according to claim 12, wherein
in the outputting, information indicating a traveling speed or a traveling direction of the same object detected in the detecting and indicated by the object information is further included in the object information and output.

14. The object detection method according to claim 12 or 13, further comprising:
tracking the same object detected in the detecting and indicated by the object information, wherein
in the outputting, a result of the tracking is further output.

15. A program for causing at least one processor to execute the object detection method according to any one of claims 1 to 14.

16. An object detection system comprising:
an obtainer that obtains a first image and a second image including pixels corresponding one to one to pixels of the first image;
a first recognizer that performs a first recognition process that recognizes a type of a first object included in the first image;
a second recognizer that performs a second recognition process that recognizes a position of a second object included in the second image; and
a detector that, when a first region based on the first object in the first image and a second region based on the second object in the second image overlap each other, detects the first object and the second object as a same object.
